# EUROPEAN PATENT APPLICATION

(11) **EP 3 024 254 A1**
(43) Date of publication of application: **25.05.2016**
(21) Application number: 14003900.9
(22) Date of filing: 20.11.2014
(51) Int. Cl.: H04W 4/00, H04W 8/20

(54) **Auto reconfiguration of SIM card while roaming**

(71) Applicant: Sankara, Georges, 75016 (FR)
(72) Inventor: Sankara, Georges, 75016 (FR)

(57) **Abstract**

The invention is a method and a business process based on a SIM card embedded application, a wireless network and an administration server to remotely reconfigure a SIM card when accessing a network outside its home country (roaming) to make the SIM card acting as a SIM card of a local network selected by the administration server.

## Description

### FIELD OF INVENTION

The invention refers to an improvement of existing roaming solutions.

The invention is a method, and architecture and a business process.

The invention is applicable for normal mobile devices and also for machine to machine (M2M) communication modules.

### BACKGROUND ART

A SIM card is a smart card used as a minimum as an authentication token to get connected to wireless networks. The SIM also embed potentially some identifiers, keys, applications or files for other purpose than just authentication on a network.

Usually a SIM card is issued by a Mobile Network Operator (MNO) or a Mobile Virtual Network Operator (MVNO) or fix network operator willing to launch Fix Mobile Convergent services. This operator is named Home PLMN (Public Land Mobile Network). During the manufacturing process of the SIM, the operator or the SIM supplier on behalf of the operator loads some credentials into the SIM card to allow the authentication on the network as identifiers, keys, and algorithms.

In the M2M context, the SIM can be issued by a device manufacturer but before its first usage the SIM should be loaded with necessary information to be able to get authenticated on a network (PLMN).

When a mobile device is moving abroad, from its Home PLMN to a visited PLMN, the SIM card get access to the visited PLMN through an authentication routed to the Home PLMN.

While in the visited PLMN, the subscriber is paying roaming fees even to call local numbers of the visited PLMN and paying also roaming fees to receive call.

While in the visited PLMN, the subscriber doesn't have a local phone number. To get reach, even callers from the same visited PLMN may dial an international number and pay international calling fees.

While roaming, the subscriber has also to pay international call fees to reach numbers in his home PLMN.

Roaming fees are also applicable for M2M devices moving from one country to another.

Some multi IMSI solutions are addressing some of the point above, but is not suitable for a large number of operators as it request to have at least one IMSI for each SIM card multiplied by the potential number of visited networks.

The current invention is making the roaming easier, smoother and cheaper.

### SUMMARY OF INVENTION

The purpose of the invention is to make the roaming easier by reconfiguring the SIM card remotely (Over The Air, OTA) to make the SIM card as a local SIM card. With this method, the SIM card is authenticated on visited PLMN the same way than local SIM cards issued by the visited PLMN taking thus advantage of the visited PLMN services and usages.

A third party has entered into agreement with multiple PLMN around the world, if possible at least one by country (referenced PLMN).

An administrative server hosted by the third party or on behalf of the third party maintains a list of referenced PLMN - taking also into account the roaming habits of the end-user - and specific information for each SIM card configuration (Profile).

The administration server is interacting with the SIM card to check the status of the SIM:

If the SIM is in its Home PLMN and the SIM configuration is the HOME configuration, no action

If the SIM is in a visited PLMN and has already the profile of this visited PLMN, no action

If the SIM is in a visited PLMN but a profile different than this visited PLMN, the administrative server sends in a secure way all relevant information to the SIM to switch to the visited PLMN Profile. It may include identifiers, parameters, keys, applications, files or any other piece of information needed to complete the Profile.

If the SIM is in its Home PLMN but with a profile different than the Home PLMN, the administrative server sends in a secure way all relevant information to the SIM and to the impacted Home PLMN network equipment to switch back to the Home PLMN (Home Profile). It may include identifiers, parameters, keys, applications, files or any other piece of information needed to complete the Profile.

At the end of the process, the SIM card is considered as a local SIM card, with a local number and the subscriber can set-up usage at local conditions.

Optionally at the end of the process, the administrative server sends a notification to the Home PLMN to activate the unconditional call forward from the Home PLMN phone number to the visited PLMN phone number.

### BRIEF DESCRIPTION OF DRAWINGS

The method and the business process are described in the following drawings by way of example, in which:
FIG 1 schematically shows an architecture of the solution
FIG 2 is a flow diagram showing a high level view of the process.

### DETAILED DESCRIPTION

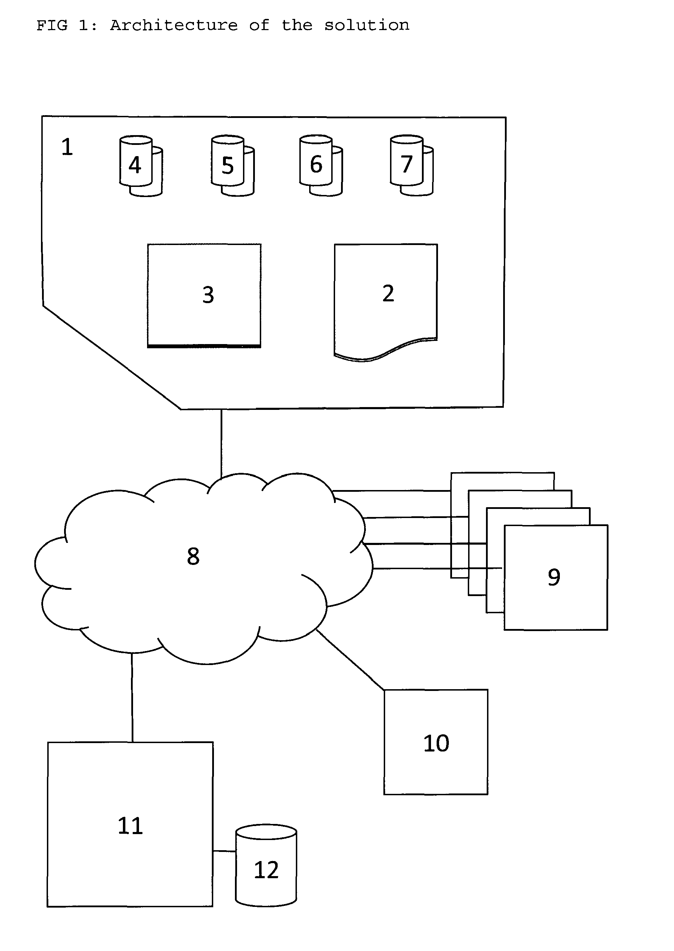

FIG 1 describes the different elements used for the method and the process.

The SIM card 1 is either a classic SIM card described in the ETSI 102 221 standard, or an embedded SIM soldered onto the mother board of a device (ETSI 102 671) or a software acting as a SIM (soft SIM).

A specific application 2 is embedded in the SIM, either during the initial personalization of the SIM or downloaded via OTA (Over The Air). The application is executed by the microcontroller of the SIM 3.

To be able to behave properly the SIM card needs to have a minimum set of elementary files described in the ETSI 102 221. This set of files will depend on the type of network and the set of services requested by the network or by the device. The set of files and applications of a SIM card is named Profile. There are applications 4, identifiers 5, parameters 6 and keys 7.

The administrative server 11 is managing the overall process of remotely reconfigure SIM cards and always keeps tracking of every events. Based on agreement with telecom operators around the world, the administrative server has a database 12 where are stored for each country the reference of the preferred MNO and the associated profile.

The administrative server has access to the SIM card through the network 8. The home network 10 or preferred networks 9 are also connected to the network. For instance, it could be via SS7 international network.

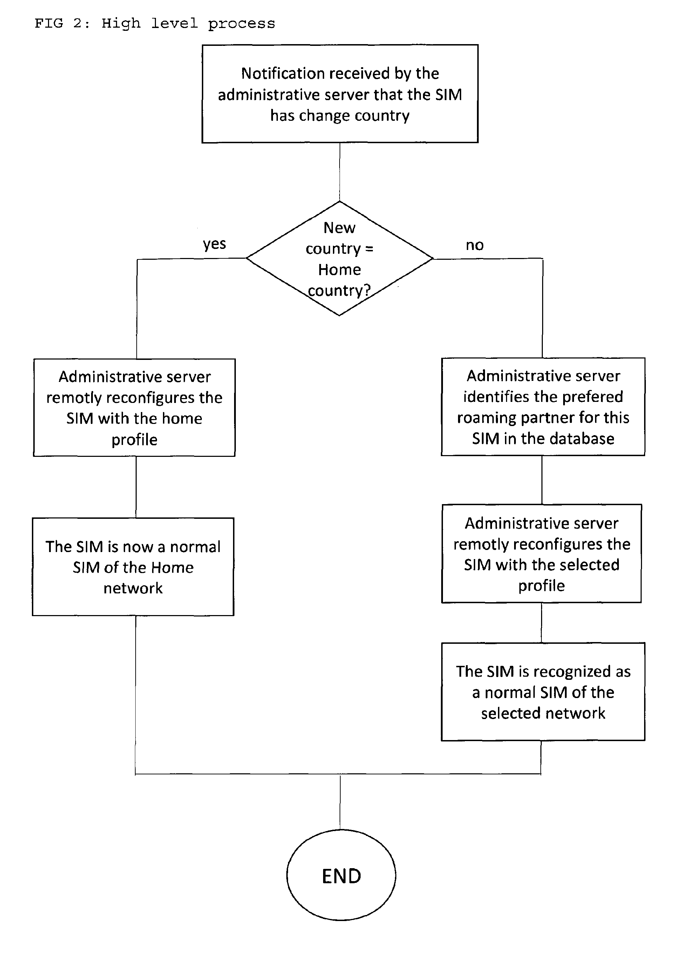

FIG 2 describes the high level flow.

When the SIM is trying to access to a network either the SIM or the network can send a notification to the administrative server to inform that the SIM is now in a different country.

If the SIM has arrived in a visited country (not the home country), the administrative server will check in its database if there is one or several preferred networks in this country. If there is only one preferred network in the visited country, the administrative server will launch a SIM reconfiguration procedure based on the selected network profile (applications, identifiers, keys and parameters).

If there are more than one preferred network in the visited country, the administrative server will follow business rules which have been negotiated between all networks to finally select one preferred network for this SIM.

If there is no preferred network, the administrative server will select a preferred roaming network by default based on business rules. The user will not have the same facilities compare to a local subscriber, but may have some services at a better price.

Reconfiguring a SIM card means sending update commands OTA to update applications, identifiers, keys and parameters. Depending on the situation, the bearer can be SMS, USSD or data over GPRS, UMTS, LTE or other data networks.

The transport of information between the administrative server and the SIM is protected using symmetric (3DES or AES) or asymmetric (RSA) encryption mechanisms.

## Claims

1. A method and a business process based on a SIM card embedded application, a wireless network and an administration server to remotely reconfigure a SIM card when accessing a network outside its home country (roaming) to make the SIM card acting as a SIM card of a local network selected by the administration server.

2. A SIM card (Subscriber Identity Module) according to claim 1 wherein the SIM card is described in the 3GPP and ETSI standards and inserted in a device.

3. A SIM card according to claim 1 and claim 2 wherein the SIM card has been distributed by a network operator (Home network).

4. A SIM card embedded application according to claim 1 wherein the application is executed by the CPU of the SIM card.

5. A SIM card embedded application according to claim 1 and claim 4 wherein the application is embedded during the initial personalization of the SIM card.

6. A SIM card embedded application according to claim 1 and claim 4 wherein the application is downloaded, installed and instantiated "Over the Air" (OTA) if not already present in the SIM.

7. A SIM card embedded application according to claim 1 and claim 4 wherein the application is updated, installed and instantiated "Over the Air" (OTA).

8. A wireless network according to claim 1 wherein the wireless network is for instance but not limited to to SIM based mobile access technology such as 2G GSM,2,5G GPRS,3G UMTS (CDMA, WCDMA, HSPA, ..),4G LTE/ WIMAX, Zigbee.

9. An administrative server according to claim 1 wherein the server is connected to the wireless network.

10. An administrative server according to claim 9 wherein the server can detect when a SIM card tries to get connected to a wireless network which is not its Home network (Visited Network).

11. An administrative server according to claim 10 wherein the server can detect in which country the SIM card is trying to get connected to a wireless network.

12. An administrative server according to claim 1 wherein the server has a list of preferred network operators per country which has been in prior negotiated with each of them.

13. An administrative server according to claim 12 wherein the server has a list of SIM parameters, applications, identifiers and keys for each preferred network operators per country.

14. An administrative server according to claim 13 wherein the server has the capacity to remotely update the content of the SIM card and user equipment parameters needed for the use of telecom services.

15. An administrative server according to claim 14 wherein the server is updating the SIM cards with parameters, applications, identifiers and keys related to the selected preferred operator when the SIM card is in a roaming situation to make the SIM card as a local SIM card.

16. An administrative server according to claim 14 wherein the server updates the content of the SIM in a secure way using symmetric encryption (for instance DES, 3DES, AES...) or asymmetric encryption (for instance RSA, Elliptic curve...).

17. An administrative server according to claim 9 wherein the server can detect when a SIM card tries to get connected back to its Home network from a Visited Network.

18. An administrative server according to claim 14 wherein the server is updating the SIM cards with parameters, applications, identifiers and keys related to the Home Network when the SIM card is back to the Home network.

19. A SIM card according to claim 2 wherein the SIM card is a physical device which is extractible or soldered onto a motherboard (embedded SIM), or a software embedded in a component (soft SIM).
